# EUROPEAN PATENT SPECIFICATION

(11) **EP 3 709 785 B1**
(45) Date of publication and mention of the grant of the patent: **14.09.2022**
(21) Application number: 18822483.6
(22) Date of filing: 12.11.2018
(51) Int. Cl.: A01B 61/02, A01B 63/10

(54) **DEVICE FOR DAMPING THE INERTIAL STRESSES**
VORRICHTUNG ZUR DÄMPFUNG DER TRÄGHEITSSPANNUNGEN
DISPOSITIF D'AMORTISSEMENT DES CONTRAINTES INERTIELLES

(30) Priority: 15.11.2017 IT 201700130300
(43) Date of publication of application: 23.09.2020
(73) Proprietor: Mita Oleodinamica S.P.A., 37039 Tregnago (VR) (IT)
(72) Inventor: CORNIA, Enrico Maria, 37039 Tregnago (VR) (IT); MERZARI, Daniele, 37039 Tregnago (VR) (IT); ZAMBONI, Roberto, 37039 Tregnago (VR) (IT)
(74) Representative: Zoli, Filippo
(86) International application number: PCT/IB2018/058871
(87) International publication number: WO 2019/097391

(56) References cited:
- WO-A1-2017/101952
- DE-A1- 2 856 583
- FR-A1- 2 354 040
- US-A- 5 884 204

## Description

### Technical Field

The present invention relates to a device for damping inertial stresses.

### Background Art

As is known, agricultural vehicles provide for the use of a so-called "three-point linkage", applied to the rear of the vehicle itself, which is adapted to support a working implement.

During the movement of the agricultural vehicle, the working implement is suitably lifted to ensure the easier movement of the vehicle itself. More in particular, the three-point linkage is provided with a lifting apparatus which keeps the implement raised cantilevered during the movement and transport phases. During these phases the lifting apparatus is blocked and therefore behaves like a rigid body.

As can be easily appreciated, during the transport phase, the agricultural vehicle may encounter holes or bumps, the crossing of which involves an increase in the force applied to the lifter, and therefore to the tractor, such as to generate annoying vibrations which can affect, sometimes negatively, the maneuverability of the vehicle.

Such stresses, besides making driving difficult and uncomfortable, also cause an increase in stresses on the mechanical parts involved and, therefore, a greater risk of breakages or malfunctions.

To overcome this drawback, electronic type devices are generally used adapted to lower the lifter when they detect a load peak exceeding a predefined value, in order to counterbalance the forces.

These devices of known type do however have a number of drawbacks.

These are in fact expensive and therefore often not suitable for certain market segments, thus limiting their development.

Moreover, the working conditions in which these types of vehicles operate, characterized by high mechanical stresses, make their use particularly exposed to damage and, therefore, unreliable.

FR-A-2 354 040 discloses a device for damping the stresses of agricultural vehicles comprising one feeding line of a pressurized work fluid, one lifting apparatus for lifting at least one work tool, provided with at least one actuation element and with at least one thrust chamber communicating with the feeding line, at least one drain line of the work fluid and valve means interposed between the feeding line and the drain line and adapted to place them in communication with each other as a result of a predefined pressure increase inside the thrust chamber.

### Description of the Invention

The main aim of the present invention is to provide a device for damping inertial stresses which is of low cost and which can be fitted to any type of agricultural vehicle, both of new construction and pre-existing.

Within this aim, one object of the present invention is to provide a device which is able to adapt by itself to the load applied to the three-point linkage.

Another object of the present invention is to avoid the use of electronic components and, at the same time, to ensure safe and practical operation.

Another object of the present invention is to devise a device for damping inertial stresses which allows overcoming the aforementioned drawbacks of the prior art within the scope of a simple, rational, easy, efficient to use and cost-effective solution.

The aforementioned objects are achieved by the present device for damping inertial stresses according to claim 1.

### Brief Description of the Drawings

Other characteristics and advantages of the present invention will become more evident from the description of a preferred, but not exclusive embodiment of a device for damping inertial stresses, illustrated by way of an indicative, but non-limiting example, in the attached drawings in which:
Figure 1 is a hydraulic diagram of a device according to the invention;

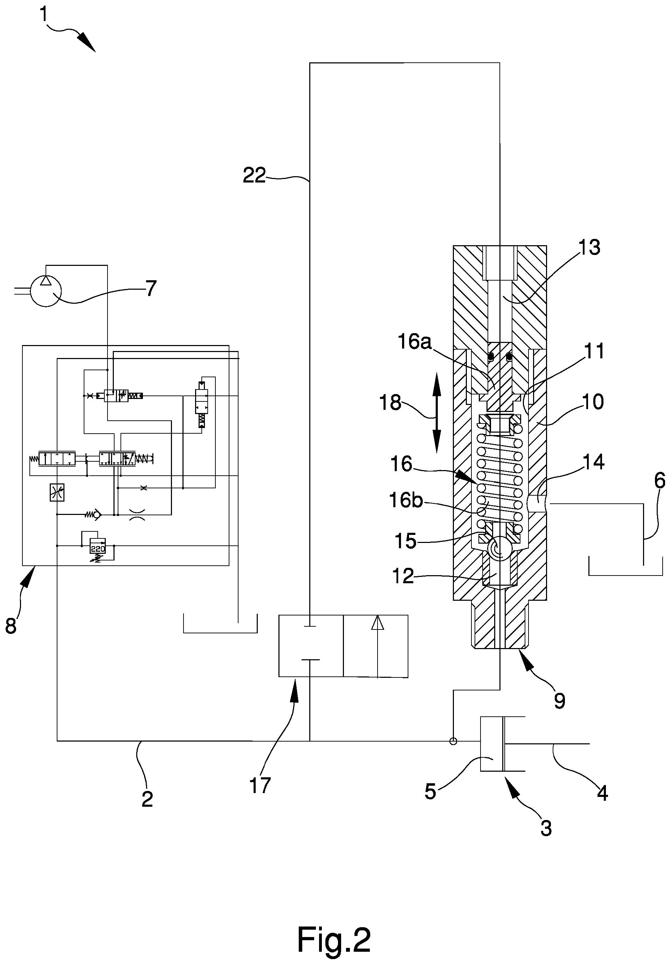

Figure 2 is the hydraulic diagram of Figure 1 with the first valve means shown in section.

### Embodiments of the Invention

With particular reference to these figures, reference numeral 1 globally indicates a device for damping inertial stresses.

The device 1 comprises at least one feeding line 2 of a pressurized work fluid, at least one lifting apparatus 3 for lifting at least one working implement (not shown in the illustrations), provided with at least one actuation element 4 and with at least one thrust chamber 5 communicating with the feeding line 2 and adapted to move the actuation element 4 due to the effect of the variation in pressure of the work fluid inside it, and at least one drain line 6 of the work fluid.

Conveniently, the lifting apparatus 3 comprises a leverage system for controlling the position of the working implement.

The feeding line 2 is connectable to pumping means 7 for pumping the work fluid and pressure adjustment means 8 are provided, e.g., of the type of a plurality of distributors connected to each other in a fluid-operated manner, along the feeding line 2. The pumping means 7 and the adjustment means 8 are not part of the present invention.

According to the invention, the device 1 comprises valve means 9, 17 interposed between the feeding line 2 and the drain line 6 and adapted to place these in communication with each other as a result of a predefined pressure increase inside the thrust chamber 5.

By effect of the connection between the feeding line 2 and the drain line 6 a pressure reduction is obtained and along the feeding line itself which, by means of the reverse movement of the actuation element 4, causes the lowering of the working implement. The movement of the working implement makes it possible to counteract the inertial forces generated by the jerky movement of the vehicle.

According to the invention, the valve means 9, 17 comprise first valve means 9 interposed between the feeding line 2 and the drain line 6 and adapted to place them in communication with each other when achieving the predefined pressure increase, at least one piloting line 22 acting on the first valve means 9 and second valve means 17 which can be commanded in order to place in communication/isolate the piloting line 22 with/from the feeding line 2.

According to the invention, the first valve means 9 comprise at least one body 10 in which is formed at least one seat 11 which is provided with at least a first port 12 communicating with the feeding line 2, with at least a second port 13 communicating with the piloting line 22 and with at least a third port 14 communicating with the drain line 6.

The first and the second port 12 and 13 are arranged on opposite sides of the seat 11.

Inside the seat 11 is housed at least one shutter 15, placed facing the first port 12 and moveable between a closing position and an opening position of the first port itself.

Inside the seat 11 is also housed at least one piloting element 16, positioned facing the second port 13 and adapted to push the shutter 15 towards the closing position. The shutter 15 is adapted to be displaced to the opening position as a result of the predefined pressure increase mentioned above along the feeding line 2 and of the isolation of the piloting line 22 from the feeding line itself. More in detail, after the second port 13 has been isolated from the feeding line 2, by means of the second valve means 17, the pressure applied by the work fluid on the piloting element 16, and therefore by the latter on the shutter 15, is fixed. The shutter 15 is therefore able to move from the closing position to the opening position when there is an overpressure along the feeding line 2, e.g. due to an increase in the pressure present in the thrust chamber 5, such as to overcome the force applied by the piloting element 16.

In the opening position of the shutter 15, the first port 12 is placed in communication with the third port 14, so that one part of the work fluid present along the feeding line 2 reaches the drain line 6, thus reducing the pressure inside the thrust chamber 5.

According to the invention, the device 1 comprises second valve means 17, interposed between the feeding line 2 and the piloting line 22 and operable to open / close the fluid-operated connection between these.

More in particular, the second valve means 17 are of the type of a tap having two work positions, i.e. a first position, in which the piloting line 22 is placed in communication with the feeding line 2, and a second position, in which the piloting line 22 is isolated from the feeding line 2. In the first position of the tap 17 the work fluid enters inside the body 10 and operates on the piloting element 16 by applying a force thereon, while in the second position (active system), the fluid-operated connection between the feeding line 2 and the piloting line 22 is interrupted, so that the work fluid previously entered into the second port 13 operates on the piloting element 16. When the tap 17 is in the second work position, the force that the work fluid applies on the piloting element 16 is no longer affected by the pressure variations occurring along the feeding line 2, so it remains substantially unaltered.

In the embodiment shown in the illustrations, the second port 13 has a larger area than the first port 12. Pressure being equal, the work fluid applies a greater force on the piloting element 16 than on the shutter 15.

Suitably, the piloting element 16 comprises at least one thrust element 16a arranged facing the second port 13 and moveable in translation along a flowing direction 18 according to the pressure of the work fluid along the feeding line 2. In particular, when the second valve means 17 are in the first work position, the thrust element 16a moves along the flowing direction 18, towards or away from the shutter 15, due to an increase and decrease respectively in the pressure of the work fluid present along the feeding line 2.

Depending on the direction of movement of the thrust element 16a, the force applied by the thrust element 16a on the shutter 15 therefore changes. Advantageously, the piloting element 16 comprises elastic means 16b interposed between the thrust element 16a and the shutter 15, where the thrust element 16a is adapted to interact with the elastic means 16b as a result of the displacement thereof along the flowing direction 18, so as to vary the force which the elastic means themselves apply on the shutter 15.

Preferably, the elastic means 16b are of the pre-compressed type.

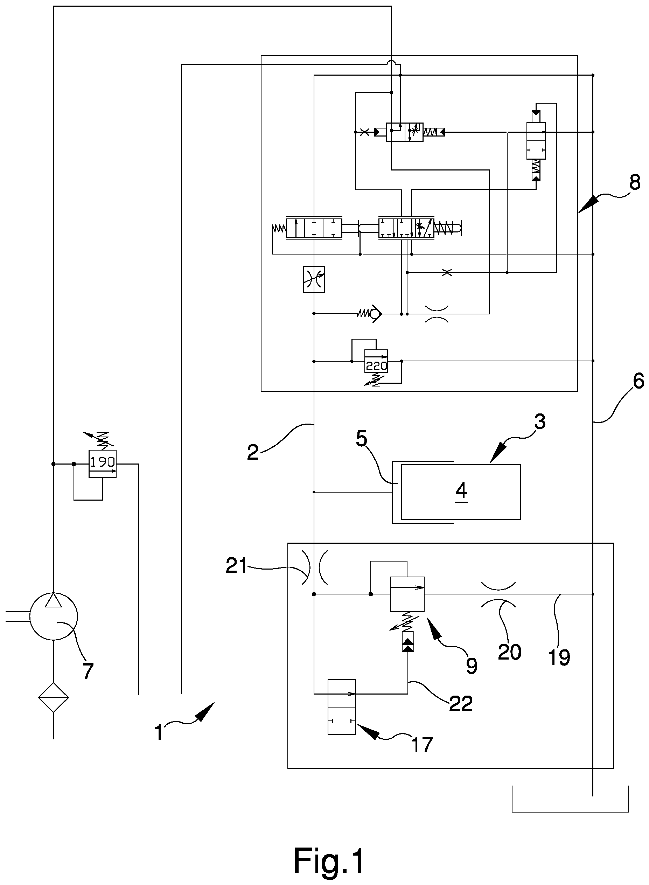

Between the third port 14 and the drain line 6 is interposed at least one connecting section, identified with reference numeral 19 in Figure 1, along which is arranged at least a first restriction 20.

Conveniently, the device 1 comprises at least a second restriction 21 arranged along the feeding line 2 and interposed between the thrust chamber 5 and the valve means 9 and 17.

More in particular, the first restriction 20 and the second restriction 21 permit limiting the flow rate of the work fluid coming out of the thrust chamber 5, so as to obtain the instantaneous lowering of the working implement which is at the same time gradual and limited.

The operation of the present invention is as follows.

Whenever it becomes necessary to transport the working implement carried by the agricultural vehicle, the lifting apparatus 3 is operated so as to lift the working implement itself, conveying work fluid under pressure inside the thrust chamber 5 by means of the pumping means 7 and the pressure adjustment means 8.

The working implement is then kept in raised position while maintaining the thrust chamber 5 under pressure. As can be easily appreciated, the pressure of the work fluid inside the thrust chamber 5 is proportional to the load lifted by the actuation element 4. This pressure is therefore considered as the nominal transport pressure.

In this phase, the work fluid present along the feeding line 2 enters the first port 12, and starts to operate on the shutter 15.

At the same time, the second valve means 17 are arranged in the first work position and the work fluid present along the feeding line 2 also runs along the piloting line 22 and enters the second port 13 starting to operate on the piloting element 16.

More in particular, the work fluid entering through the second port 13 applies a force on the thrust element 16a such as to move it along the flowing direction 18 so as to compress the elastic means 16b, which in turn apply a force on the shutter 15 keeping it in the closing position. Since the area of the second port 13 is larger than that of the first port 12, the force applied by the work fluid on the thrust element 16a is greater than that applied on the shutter 15, which therefore remains in the closing position.

Subsequently, the second valve means 17 move to the second work position, so as to isolate the piloting line 22, and therefore the second port 13, from the feeding line 2. This way, the "calibration" of the first valve means 9 is carried out, inasmuch as by effect of the movement of the second valve means 17 to the second work position, the pressure of the work fluid operating on the piloting element 16 remains fixed at the nominal transport value, as it can no longer be affected by the pressure variations along the feeding line 2.

Whenever the agricultural vehicle runs over any bumps or hollows, due to the stress imposed by the working implement, the pressure inside the thrust chamber 5 increases and, consequently, so does the pressure of the work fluid along the feeding line 2.

Such pressure increase causes an increase in the force applied by the work fluid on the shutter 15. As can be appreciated, the shutter 15 moves from the closing position to the opening position when the force applied by the work fluid on it exceeds the sum of the forces applied in the opposite direction by the thrust element 16a and by the elastic means 16b.

When the shutter 15 reaches the opening position, the work fluid present along the feeding line 2 then enters the seat 11 and flows out of the third port 14 to reach the drain line 6.

The flow of the work fluid into the drain line 6 thus causes a reduction in pressure along the feeding line 2 and, consequently, inside the thrust chamber 5, as a result of which the actuation element 4 moves and lowers the working implement.

The movement of the lifting apparatus 3 and the consequent lowering of the working implement makes it possible to dampen the inertial forces generated by the stresses caused by the roughness of the ground. As described above, the restrictions 20 and 21 permit gradually lowering the working implement, so as not to impair its safe transport and at the same time maintain driving comfort. Subsequently, the actuation element 4 is returned to the starting position by conveying work fluid under pressure into the thrust chamber 5.

It has in practice been ascertained that the described invention achieves the intended objects and, in particular, the fact is underlined that the first valve means allow discharging a part of the work fluid contained in the thrust chamber of the actuation element following the occurrence of a predefined overpressure inside it.

More in particular, by activating the device forming the subject of the present invention, the force operating on the piloting element is calibrated from time to time at the nominal transport pressure, and in this way it is possible to obtain the automatic opening of the shutter when the pressure of the work fluid inside the thrust chamber exceeds the nominal transport pressure by a predefined value.

The device forming the subject of the present invention therefore adapts by itself to the weight of the load applied to the lifting device and permits lowering the working implement to offset the inertial forces generated in the event of abnormal stresses upon reaching a predefined pressure peak inside the thrust chamber of the lifting device itself.

## Claims

1. Device (1) for damping the stresses of agricultural vehicles, comprising:
- at least one feeding line (2) of a pressurized work fluid;
- at least one lifting apparatus (3) for lifting at least one work tool, provided with at least one actuation element (4) and with at least one thrust chamber (5) communicating with said feeding line (2) and adapted to move said actuation element (4) due to the effect of the variation in pressure of the work fluid inside it;
- at least one drain line (6) of the work fluid;
- valve means (9, 17) interposed between said feeding line (2) and said drain line (6) and configured to place them in communication with each other as a result of a predefined pressure increase inside said thrust chamber (5), wherein said valve means (9, 17) comprise first valve means (9) interposed between said feeding line (2) and said drain line (6) and adapted to place them in communication with each other when achieving said predefined pressure increase, at least one piloting line (22) acting on said first valve means (9) and second valve means (17) which can be commanded in order to place in communication/isolate said piloting line (22) with/from said feeding line (2), **characterized by** the fact that said first valve means (9) comprise at least one body (10) in which at least one seat (11) is formed, provided with at least a first port (12) communicating with said feeding line (2), with at least a second port (13) communicating with said piloting line (22) and with at least a third port (14) communicating with said drain line (6), where inside said seat (11) is housed at least one shutter (15) placed facing said first port (12) and moveable between a closing position and an opening position of the first port itself, where in the opening position said first port (12) is placed in communication with said third port (14), and at least one piloting element (16) is placed facing said second port (13) and adapted to push said shutter (15) towards the closing position, said shutter (15) displacing to the opening position as a result of said predefined pressure increase and of the isolation of said piloting line (22) from said feeding line (2).

2. Device according to claim 1, **characterized by** the fact that said second valve means (17) are interposed between said feeding line (2) and said piloting line (22) and are operable between a first work position, in which said piloting line (22) is communicating with said feeding line (2), and a second work position, in which said piloting line (22) is isolated from said feeding line (2).

3. Device (1) according to one or more of the preceding claims, **characterized by** the fact that said second port (13) has a greater area with respect to said first port (12).

4. Device (1) according to one or more of the preceding claims5, **characterized by** the fact that said piloting element (16) comprises at least one thrust element (16a) arranged facing said second port (13) and moveable in translation along a flowing direction (18) due to the effect of the variation in pressure along said feeding line (2).

5. Device (1) according to claim 4, **characterized by** the fact that said piloting element (16) comprises elastic means (16b) interposed between said thrust element (16a) and said shutter (15), said thrust element (16a) being adapted to interact with said elastic means (16b) as a result of the displacement thereof along said flowing direction (18).

6. Device (1) according to claim 5, **characterized by** the fact that said elastic means (16b) are of the pre-compressed type.

7. Device (1) according to one or more of the preceding claims, **characterized by** the fact that it comprises at least one connecting section (19) interposed between said third port (14) and said drain line (6) and by the fact of comprising at least a first restriction (20) arranged along said connecting section (19).

8. Device (1) according to one or more of the preceding claims, **characterized by** the fact that it comprises at least a second restriction (21) arranged along said feeding line and interposed between said thrust chamber (5) and said valve means (9, 17).

## Patentansprüche

1. Vorrichtung (1) zur Dämpfung der Beanspruchungen von landwirtschaftlichen Fahrzeugen, umfassend:
- mindestens eine Zufuhrleitung (2) für eine unter Druck stehendes Arbeitsfluid;
- mindestens eine Hebevorrichtung (3) zum Anheben mindestens eines Arbeitswerkzeugs, die mit mindestens einem Betätigungselement (4) und mit mindestens einer Druckkammer (5) versehen ist, die mit der Zufuhrleitung (2) in Verbindung steht und ausgebildet ist, das Betätigungselement (4) aufgrund der Wirkung der Druckveränderung des Arbeitsfluids in ihrem Inneren zu bewegen;
- mindestens eine Abflussleitung (6) für das Arbeitsfluid;
- Ventilmittel (9, 17), die zwischen der Zufuhrleitung (2) und der Abflussleitung (6) angeordnet und ausgebildet sind, sie infolge eines vordefinierten Druckanstiegs innerhalb der Druckkammer (5) miteinander in Verbindung zu bringen, wobei die Ventilmittel (9, 17) eine erste Ventileinrichtung (9) umfassen, die zwischen der Zufuhrleitung (2) und der Abflussleitung (6) angeordnet ist und ausgebildet ist, sie miteinander in Verbindung zu bringen, wenn der vordefinierte Druckanstieg erreicht wird, mindestens eine Steuerleitung (22), die auf die erste Ventileinrichtung (9) wirkt, und eine zweite Ventileinrichtung (17), die gesteuert werden kann, um die Steuerleitung (22) mit/von der Zufuhrleitung (2) in Verbindung zu bringen/zu trennen, **dadurch gekennzeichnet, dass** die erste Ventileinrichtung (9) mindestens einen Körper (10) umfasst, in dem mindestens ein Sitz (11) ausgebildet ist, der mit mindestens einer ersten Öffnung (12) versehen ist, die mit der Zufuhrleitung (2) in Verbindung steht, mit mindestens einer zweiten Öffnung (13), die mit der Steuerleitung (22) in Verbindung steht, und mit mindestens einer dritten Öffnung (14), die mit der Abflussleitung (6) in Verbindung steht, wobei im Inneren des Sitzes (11) mindestens ein Verschluss (15) untergebracht ist, der der ersten Öffnung (12) zugewandt angeordnet ist und zwischen einer Schließposition und einer Öffnungsposition der ersten Öffnung selbst beweglich ist, wobei in der Öffnungsposition die erste Öffnung (12) mit der dritten Öffnung (14) in Verbindung steht, und mindestens ein Steuerelement (16) der zweiten Öffnung (13) zugewandt angeordnet und ausgebildet ist, den Verschluss (15) in Richtung der Schließposition zu schieben, wobei sich der Verschluss (15) infolge des vordefinierten Druckanstiegs und der Isolierung der Steuerleitung (22) von der Zufuhrleitung (2) in die Öffnungsposition verschiebt.

2. Vorrichtung nach Anspruch 1, **dadurch gekennzeichnet, dass** die zweite Ventileinrichtung (17) zwischen der Zufuhrleitung (2) und der Steuerleitung (22) angeordnet und zwischen einer ersten Arbeitsposition, in der die Steuerleitung (22) mit der Zufuhrleitung (2) in Verbindung steht, und einer zweiten Arbeitsposition, in der die Steuerleitung (22) von der Zufuhrleitung (2) getrennt ist, betätigbar ist.

3. Vorrichtung (1) nach einem oder mehreren der vorhergehenden Ansprüche, **dadurch gekennzeichnet, dass** die zweite Öffnung (13) eine größere Fläche im Vergleich zu der ersten Öffnung (12) aufweist.

4. Vorrichtung (1) nach einem oder mehreren der vorhergehenden Ansprüche, **dadurch gekennzeichnet, dass** das Steuerelement (16) mindestens ein Schubelement (16a) umfasst, das der zweiten Öffnung (13) zugewandt angeordnet ist und aufgrund der Wirkung der Druckänderung entlang der Zufuhrleitung (2) entlang einer Strömungsrichtung (18) in einer Translationsbewegung bewegbar ist.

5. Vorrichtung (1) nach Anspruch 4, **dadurch gekennzeichnet, dass** das Steuerelement (16) ein elastisches Mittel (16b) umfasst, das zwischen dem Schubelement (16a) und dem Verschluss (15) angeordnet ist, wobei das Schubelement (16a) ausgebildet ist, mit den elastischen Mitteln (16b) infolge seiner Verschiebung entlang der Strömungsrichtung (18) zusammenzuwirken.

6. Vorrichtung (1) nach Anspruch 5, **dadurch gekennzeichnet, dass** die elastischen Mittel (16b) vom vorkomprimierten Typ sind.

7. Vorrichtung (1) nach einem oder mehreren der vorhergehenden Ansprüche, **dadurch gekennzeichnet, dass** sie mindestens einen Verbindungsabschnitt (19) umfasst, der zwischen der dritten Öffnung (14) und der Abflussleitung (6) angeordnet ist, und dass sie mindestens eine erste Verengung (20) umfasst, die entlang des Verbindungsabschnitts (19) angeordnet ist.

8. Vorrichtung (1) nach einem oder mehreren der vorhergehenden Ansprüche, **dadurch gekennzeichnet, dass** sie mindestens eine zweite Verengung (21) umfasst, die entlang der Zufuhrleitung und zwischen der Druckkammer (5) und den Ventilmitteln (9, 17) angeordnet ist.

## Revendications

1. - Dispositif (1) pour amortir les contraintes de véhicules agricoles, comprenant :
- au moins une ligne d'alimentation (2) d'un fluide de travail sous pression ;
- au moins un appareil de levage (3) pour lever au moins un outil de travail, comportant au moins un élément d'actionnement (4) et au moins une chambre de poussée (5) communiquant avec ladite ligne d'alimentation (2) et agencé pour déplacer ledit élément d'actionnement (4) sous l'effet de la variation de pression du fluide de travail à l'intérieur de celle-ci ;
- au moins une conduite de drainage (6) du fluide de travail ;
- des moyens de vanne (9, 17) interposés entre ladite ligne d'alimentation (2) et ladite ligne de drainage (6) et configurés pour les mettre en communication l'une avec l'autre en conséquent d'une augmentation de pression prédéfinie à l'intérieur de ladite chambre de poussée (5), lesdits moyens de vanne (9, 17) comprenant des premiers moyens de vanne (9) interposés entre ladite ligne d'alimentation (2) et ladite ligne de drainage (6) et conçus pour les mettre en communication l'une avec l'autre lorsque ladite augmentation de pression prédéfinie est atteinte, au moins une ligne de pilotage (22) agissant sur lesdits premiers moyens de vanne (9) et des seconds moyens de vanne (17) qui peuvent être commandés de façon à mettre en communication ladite ligne de pilotage (22) avec ladite ligne d'alimentation (2) ou à l'isoler de celle-ci,
**caractérisé par le fait que** lesdits premiers moyens de vanne (9) comprennent au moins un corps (10) dans lequel au moins un siège (11) est formé, comportant au moins un premier orifice (12) communiquant avec ladite ligne d'alimentation (2), au moins un deuxième orifice (13) communiquant avec ladite ligne de pilotage (22), et au moins un troisième orifice (14) communiquant avec ladite ligne de drainage (6), à l'intérieur dudit siège (11) étant reçu au moins un obturateur (15) placé face audit premier orifice (12) et mobile entre une position de fermeture et une position d'ouverture du premier orifice lui-même, dans la position d'ouverture ledit premier orifice (12) étant placé en communication avec ledit troisième orifice (14), et au moins un élément de pilotage (16) étant placé face audit deuxième orifice (13) et agencé pour pousser ledit obturateur (15) vers la position de fermeture, ledit obturateur (15) se déplaçant jusqu'à la position d'ouverture en conséquence de ladite augmentation de pression prédéfinie et de l'isolation de ladite ligne de pilotage (22) par rapport à ladite ligne d'alimentation (2) .

2. - Dispositif selon la revendication 1, **caractérisé par le fait que** lesdits seconds moyens de vanne (17) sont interposés entre ladite ligne d'alimentation (2) et ladite ligne de pilotage (22) et sont actionnables entre une première position de travail, dans laquelle ladite ligne de pilotage (22) communique avec ladite ligne d'alimentation (2), et une seconde position de travail, dans laquelle ladite ligne de pilotage (22) est isolée de ladite ligne d'alimentation (2).

3. - Dispositif (1) selon une ou plusieurs des revendications précédentes, **caractérisé par le fait que** ledit deuxième orifice (13) a une section plus grande par comparaison audit premier orifice (12).

4. - Dispositif (1) selon une ou plusieurs des revendications précédentes, **caractérisé par le fait que** ledit élément de pilotage (16) comprend au moins un élément de poussée (16a) disposé face audit deuxième orifice (13) et mobile en translation selon une direction d'écoulement (18) sous l'effet de la variation de pression le long de ladite ligne d'alimentation (2).

5. - Dispositif (1) selon la revendication 4, **caractérisé par le fait que** ledit élément de pilotage (16) comprend des moyens élastiques (16b) interposés entre ledit élément de poussée (16a) et ledit obturateur (15), ledit élément de poussée (16a) étant agencé pour interagir avec lesdits moyens élastiques (16b) en conséquence de leur déplacement selon ladite direction d'écoulement (18).

6. - Dispositif (1) selon la revendication 5, **caractérisé par le fait que** lesdits moyens élastiques (16b) sont du type précomprimé.

7. - Dispositif (1) selon une ou plusieurs des revendications précédentes, **caractérisé par le fait qu'**il comprend au moins un tronçon de raccordement (19) interposé entre ledit troisième orifice (14) et ladite ligne de drainage (6), et **par le fait qu'**il comprend au moins un premier étranglement (20) disposé le long dudit tronçon de raccordement (19).

8. - Dispositif (1) selon une ou plusieurs des revendications précédentes, **caractérisé par le fait qu'**il comprend au moins un second étranglement (21) disposé le long de ladite ligne d'alimentation et interposé entre ladite chambre de poussée (5) et lesdits moyens de vanne (9, 17) .
